# EUROPEAN PATENT APPLICATION

(11) **EP 4 064 656 A1**
(43) Date of publication of application: **28.09.2022**
(21) Application number: 20906762.8
(22) Date of filing: 24.12.2020
(51) Int. Cl.: H04M 1/02, G06F 1/16, H05K 5/00

(54) **SHELL ASSEMBLY AND ELECTRONIC DEVICE**

(30) Priority: 24.12.2019 CN 201911348628
(71) Applicant: GUANGDONG OPPO MOBILE TELECOMMUNICATIONS CORP., LTD., Dongguan, Guangdong 523860 (CN)
(72) Inventor: JIA, Yuhu, Dongguan, Guangdong 523860 (CN)
(74) Representative: Taor, Simon Edward William
(86) International application number: PCT/CN2020/138964
(87) International publication number: WO 2021/129730

(57) **Abstract**

Provided in embodiments of the present disclosure are a shell assembly and an electronic device. The electronic device includes a first shell, a second shell, a first driving device, a flexible screen assembly, and a second driving device, wherein the first driving device drives the first shell to move relative to the second shell, and the second driving device drives the flexible screen assembly to move following relative motion of the first shell and the second shell, so as to unfold part of the flexible screen assembly outside the first shell or the second shell, thus the display area of the electronic device can be increased.

## Description

### CROSS-REFERENCE TO RELATED APPLICATIONS

The present application claims priority to Chinese Patent Application No. 201911348628.X filed with the Chinese Patent Office on December 24, 2019, entitled "Electronic Device", the entire content of which is incorporated herein by reference.

### TECHNICAL FIELD

The present disclosure relates to the technical field of electronics, and in particular to a shell assembly and an electronic device.

### BACKGROUND

Generally, electronic devices such as smart-phones are equipped with a display screen. The electronic device displays images through the display screen for the user's convenience. However, the electronic devices in the related art have limited space to install the display screen, thus limiting the display area of the display screen.

### SUMMARY

Provided in the embodiments of the present disclosure are a shell assembly and an electronic device, which can increase display area of the electronic device without the need for additional installation space for the flexible screen assembly.

Provided in an embodiment of the present disclosure is an electronic device, including: a first shell; a second shell movably connected to the first shell; a first driving device configured to drive the first shell to move relative to the second shell, so as to realize mating and separation of the first shell and the second shell; a flexible screen assembly, one end of the flexible screen assembly being connected to the first shell; and a second driving device connected to the other end of the flexible screen assembly, the second driving device being configured to drive the flexible screen assembly to move following relative motion of the first shell and the second shell, so as to retract part of the flexible screen assembly within the first shell or the second shell, or to unfold part of the flexible screen assembly outside the first shell or the second shell.

Provided in an embodiment of the present disclosure is a shell assembly adapted to retraction and unfolding of a flexible screen assembly, including: a first shell; a second shell movably connected to the first shell; a first driving device configured to drive the first shell to move relative to the second shell, so as to realize mating and separation of the first shell and the second shell; and a second driving device connected to the other end of the flexible screen assembly, the second driving device being configured to drive the flexible screen assembly to move following relative motion of the first shell and the second shell, so as to retract part of the flexible screen assembly within the first shell or the second shell, or to unfold part of the flexible screen assembly outside the first shell or the second shell.

By providing two driving devices to control motion state of the first shell, the second shell and the flexible screen assembly respectively, the embodiments of the present disclosure make display area of the flexible screen assembly selectable. Compared with the display screens with fixed installation space in the related art, the embodiments of the present disclosure can increase display area of the electronic device without additional installation space for the flexible screen assembly.

### BRIEF DESCRIPTION OF THE DRAWINGS

FIG. 1 is a first schematic structural diagram of the electronic device provided in the embodiments of the present disclosure;
FIG. 2 is a schematic structural diagram of the first shell in the electronic device shown in FIG. 1;
FIG. 3 is a schematic structural diagram of the second shell in the electronic device shown in FIG. 1;
FIG. 4 is a second schematic structural diagram of the electronic device provided in the embodiments of the present disclosure;
FIG. 5 is a third schematic structural diagram of the electronic device provided in the embodiments of the present disclosure;
FIG. 6 is a schematic structural diagram of the first driving device in the electronic device shown in FIG. 5;
FIG. 7 is a schematic structural diagram of the connecting member in the first driving device shown in FIG. 6;
FIG. 8 is a fourth schematic structural diagram of the electronic device provided in the embodiments of the present disclosure;
FIG. 9 is a schematic structural diagram of the first driving device in the electronic device shown in FIG. 8;
FIG. 10 is a fifth schematic structural diagram of the electronic device provided in the embodiments of the present disclosure;
FIG. 11 is a sixth schematic structural diagram of the electronic device provided in the embodiments of the present disclosure;
FIG. 12 is a seventh schematic structural diagram of the electronic device provided in the embodiments of the present disclosure;
FIG. 13 is a schematic structural diagram of the first driving device in the electronic device shown in FIG. 12;
FIG. 14 is a schematic structural diagram of the push assembly in the first driving device shown in FIG. 12.

### DETAILED DESCRIPTION OF THE PREFERRED EMBODIMENTS

Technical solutions in the embodiments of the present disclosure will be clearly and completely described below in conjunction with the accompanying drawings in the present disclosure. Obviously, the described embodiments are only part of the embodiments of the present disclosure, but not all of them. All other embodiments obtained by a person skilled in the art without creative effect based on the embodiments of the present disclosure fall within the scope of protection of the present disclosure.

Provided in an embodiment of the present disclosure is an electronic device, including: a first shell; a second shell movably connected to the first shell; a first driving device configured to drive the first shell to move relative to the second shell, so as to realize mating and separation of the first shell and the second shell; a flexible screen assembly, one end of the flexible screen assembly being connected to the first shell; and a second driving device connected to the other end of the flexible screen assembly, the second driving device being configured to drive the flexible screen assembly to move following relative motion of the first shell and the second shell, so as to retract part of the flexible screen assembly within the first shell or the second shell, or to unfold part of the flexible screen assembly outside the first shell or the second shell.

The electronic device further includes a processor, wherein the processor is coupled to the first driving device and the second driving device, and is configured to, at different timings, control the first driving device to drive the first shell to move relative to the second shell, and control the second driving device to drive the flexible screen assembly to move following the relative motion of the first shell and the second shell.

The processor is configured to control the first driving device at a first timing to drive the first shell to move relative to the second shell, so as to separate the first shell from the second shell, and to control the second driving device at a second timing to drive the flexible screen assembly to move following the relative motion of the first shell and the second shell, so that part of the flexible screen assembly is unfolded outside the first shell or the second shell, wherein the first timing is earlier than the second timing.

The processor is further configured to control the second driving device at a third timing to drive the flexible screen assembly to move, and to control the first driving device at a fourth timing to drive the first shell to move relative to the second shell so as to make the first shell mate with the second shell, so that part of the flexible screen assembly is retracted within the first shell or the second shell, wherein the third timing is later than the fourth timing.

The first driving device and the second driving device are provided on the first shell; the flexible screen assembly is wound on the second shell and is movably connected to the second shell; one end of the flexible screen assembly is fixedly connected to the first shell, and the other end of the flexible screen assembly is connected to the second driving device.

The first driving device includes a first motor and a push mechanism connected to the first motor; the first motor is configured to drive the push mechanism to move in a direction parallel to the first shell, such that the second shell moves along with the push mechanism in a direction parallel to the first shell, so as to realize mating and separation of the first shell and the second shell.

The push mechanism includes a transmission assembly connected to the first motor, and a push assembly connected to the transmission assembly and the second shell; the first motor is configured to drive the transmission assembly to move, so that the push mechanism moves along with the transmission assembly and drives the second shell to move in a direction parallel to the first shell.

The push assembly includes a first base provided at the first shell, and a push rod slidably connected to the first base and connected to the second shell; a resilient member is sleeved on an outer surface of the push rod, to support and protect the push rod.

The transmission assembly includes a second base provided at the first shell, a transmission screw rotatably connected to the second base and connected to the first motor, and a connecting member sleeved on the transmission screw and connected to one end of the push rod; the first motor is configured to drive the transmission screw to rotate, so as to drive the connecting member and the push rod to move in a direction parallel to the first shell.

The transmission assembly further includes a guide rod provided parallel to the transmission screw; the connecting member is provided with a first through-hole and a second through-hole, wherein the transmission screw passes through the first through-hole and the guide rod passes through the second through-hole.

The transmission assembly is any of a gear set, an electric actuator, an electro-hydraulic actuator, a pneumatic actuator or a hydraulic actuator, or a combination thereof.

The second shell includes a second side, a third side, a fourth side opposite to the third side, and a roller; the second side and the roller are provided between the third side and the fourth side, and the flexible screen assembly is wound on the roller so that the roller rotates following the movement of the flexible screen assembly.

The roller includes a shaft, a first barrel and a second barrel; one end of the shaft is connected to the third side, and the other end of the shaft is connected to the fourth side; the first barrel and the second barrel are spaced on an outer surface of the shaft and are rotatably connected to the shaft; the other end of the push rod is connected to the shaft, and is located at an interval between the first barrel and the second barrel.

The second driving device includes a second motor and an attachment belt; one end of the attachment belt is connected to an output shaft of the second motor, and the other end of the attachment belt is connected to the flexible screen assembly; the second motor is configured to drive the attachment belt to extend so that part of the flexible screen assembly is unfolded outside the second shell; the second motor is further configured to drive the attachment belt to curl so that part of the flexible screen assembly is retracted within the second shell.

Further provided in an embodiment of the present disclosure is a shell assembly adapted to retraction and unfolding of a flexible screen assembly, including: a first shell; a second shell movably connected to the first shell; a first driving device configured to drive the first shell to move relative to the second shell, so as to realize mating and separation of the first shell and the second shell; and a second driving device connected to the other end of the flexible screen assembly, the second driving device being configured to drive the flexible screen assembly to move following relative motion of the first shell and the second shell, so as to retract part of the flexible screen assembly within the first shell or the second shell, or to unfold part of the flexible screen assembly outside the first shell or the second shell.

The first driving device includes a first motor and a push mechanism connected to the first motor; the first motor is configured to drive the push mechanism to move in a direction parallel to the first shell, such that the second shell moves along with the push mechanism in a direction parallel to the first shell, so as to realize mating and separation of the first shell and the second shell.

The push mechanism includes a transmission assembly connected to the first motor, and a push assembly connected to the transmission assembly and the second shell; the first motor is configured to drive the transmission assembly to move so that the push mechanism moves along with the transmission assembly and drives the second shell to move in a direction parallel to the first shell.

The push assembly includes a first base provided at the first shell, and a push rod slidably connected to the first base and connected to the second shell; a resilient member is sleeved on an outer surface of the push rod, to support and protect the push rod.

The transmission assembly includes a second base provided at the first shell, a transmission screw rotatably connected to the second base and connected to the first motor, and a connecting member sleeved on the transmission screw and connected to one end of the push rod; the first motor is configured to drive the transmission screw to rotate, so as to drive the connecting member and the push rod to move in a direction parallel to the first shell.

The second driving device includes a second motor and an attachment belt; one end of the attachment belt is connected to an output shaft of the second motor, and the other end of the attachment belt is connected to the flexible screen assembly; the second motor is configured to drive the attachment belt to extend so that part of the flexible screen assembly is unfolded outside the second shell; the second motor is further configured to drive the attachment belt to curl so that part of the flexible screen assembly is retracted within the second shell.

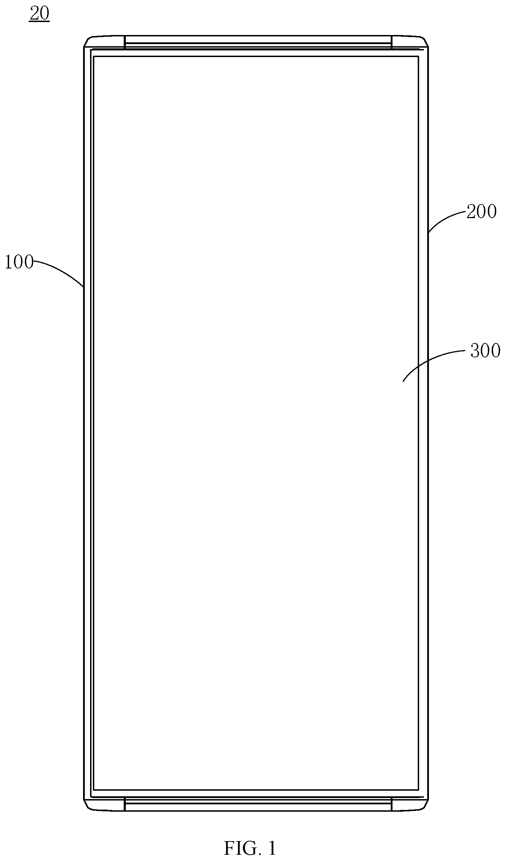

Referring to FIG. 1, which is a first schematic structural diagram of the electronic device provided in the embodiments of the present disclosure, the electronic device such as the electronic device 20 shown in FIG. 1 may be a computing device, such as a laptop computer, a computer monitor containing an embedded computer, a tablet computer, a cellular telephone, a media player, or other hand-held or portable electronic devices, a smaller device (such as a wristwatch device, a hanging device, a headphone or earpiece device, a device embedded into eyeglasses or other devices worn on the head of a user, or other wearable or miniature devices), a television, a computer monitor containing no embedded computer, a gaming device, a navigation device, an embedded system (such as a system in which electronic devices having displays are installed in a kiosk or an automobile), a device performing the functions of two or more of such devices, or other electronic devices. In the exemplary configuration of FIG. 1, the electronic device 20 is a portable device, such as a cellular phone, a media player, a tablet computer, or other portable computing devices. Other configurations may be used for the electronic device 20, if desired. The example of FIG. 1 is only exemplary.

As shown in FIG. 1, the electronic device 20 may include a first shell such as a first shell 100 and a second shell such as a second shell 200. The first shell 100 and the second shell 200 are movably connected with each other, such that a distance between the first shell 100 and the second shell 200 is adjustable. The first shell 100 and the second shell 200 may be formed of plastic, glass, ceramic, fiber composite, metal (e.g., stainless steel, aluminum, or the like), other suitable materials, or a combination of any two or more of such materials. The first shell 100 and the second shell 200 may be formed in a one-piece configuration, in which some or all of the first shell 100 and the second shell 200 are machined or molded into a single structure, or may be formed of a plurality of structures (e.g., an inner frame structure, one or more structures forming the outer shell surface, etc.). In this case, the structure and fabrication materials of the first shell 100 and the second shell 200 may be the same or different.

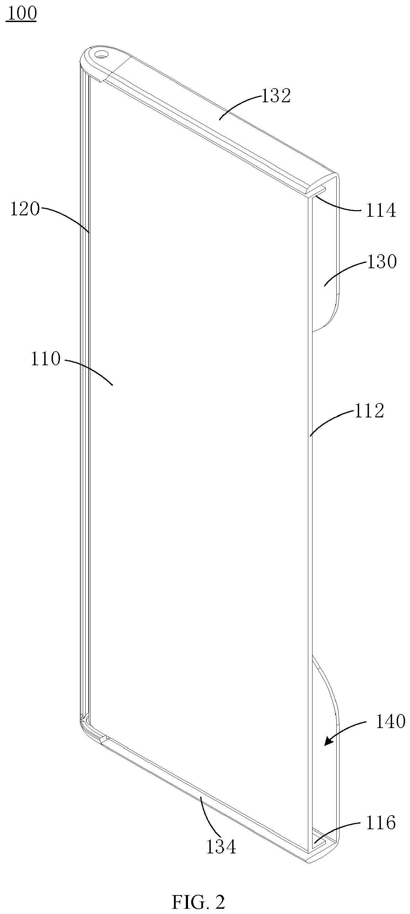

Referring to FIG. 2, which is a schematic structural diagram of the first shell in the electronic device shown in FIG. 1, the first shell 100 may include a carrier plate such as the carrier plate 110, a first side 120, and a first rear cover such as the first rear cover 130, wherein the first side 120 is provided on a circumference of the carrier plate 110. The carrier plate 110 can be used to carry internal components of the electronic device 20, such as a flexible screen assembly, a driving device, a circuit board, etc. The first side 120 can be used to form a bezel of the electronic device 20 to protect internal components of the electronic device 20. The carrier plate 110, the first side 120 and the first rear cover 130 are connected together to define an accommodation cavity 140 including an opening structure to accommodate components of the electronic device 20, such as batteries, a driving device, etc. The opening structure may provide access for the second shell 200 to enter and exit the accommodation cavity 140. The second shell 200 may move outside the accommodation cavity 140 through the opening structure, and may also move into the accommodation cavity 140 through the opening structure, so that the second shell 200 can be accommodated within the accommodation cavity 140.

The carrier plate 110 includes a body part such as the body part 112, and a plurality of side parts which are located at edge positions of the body part 112. Among them, the body part 112 may be of a regular shape, such as a rectangular structure, and the carrier plate 110 may include a first side part 114 and a second side part 116 provided opposite to each other.

One end of the first side 120 is connected to the first side part 114, and the other end of the first side 120 is connected to the second side part 116. The first side 120 is provided between the first side part 114 and the second side part 116, and two ends of the first side 120 are formed by bending along the first side part 114 and the second side part 116, respectively. For example, the first side 120 has a first end part and a second end part opposite to each other. The first end part is bent in a direction parallel to the first side part 114 and covers the outer surface of the first side part 114. The second end part is bent in a direction parallel to the second side part 116 and covers the outer surface of the second side part 116. It is to be noted that two ends of the first side part 120 may also be flush with outer surfaces of the first side part 114 and the second side part 116.

The first rear cover 130 is sleeved outside the carrier plate 110 so as to hide internal components provided on the carrier plate 110, so that the user cannot observe the components inside the electronic device 20 from outside the electronic device 20. It is understood that part of the flexible screen assembly, such as the flexible screen assembly 300, and the first rear cover 130 are provided on two opposite sides of the carrier plate 110, and part of the flexible screen assembly 300 may be provided on a display side of the carrier plate 110 to display images.

The flexible screen assembly 300 may include a flexible display module and a flexible support. The flexible support is located on a non-display side of the flexible display module for supporting the flexible display module. It is understood that the flexible support possesses a high structural strength, which on the one hand can support the flexible display module and improve flatness of the flexible display module, so that the flexible display module is not easily collapsed or wrinkled during a displaying process, and on the other hand, the flexible support can also improve an overall strength of the flexible screen assembly 300, which can protect the flexible screen assembly 300 from damage during an extending process. Among them, the flexible display module can be an OLED (Organic Light Emitting Diode) module, which may include a display substrate and packaging material with an organic light emitting material encapsulated there-between. The OLED module includes a number of OLED units, and each OLED unit is electrically connected to main board of the electronic device for self-illumination and displaying images. The flexible display module can also be a LCD (Liquid Crystal Display Liquid Crystal Display) module, which may include a display substrate and packaging material with a liquid crystal material encapsulated there-between. Main board of the electronic device provides voltage for the liquid crystal material so as to change the arrangement direction of liquid crystal molecules. Light projected from a backlight passes through the LCD module and forms images in the display area to display images.

The first rear cover 130 may include a first bent part 132 and a second bent part 134 opposite to each other. The first bent part 132 is located on the outer surface of the first side 114, and the outer surface of the first bent part 132 is flush with one end surface of the first side 120. The second bent part 134 is located on the outer surface of the second side 116, and the outer surface of the second bent part 134 is flush with the other end surface of the first side 120, so that a gap between the first rear cover 130 and the first side 120 cannot be observed from outside, which not only can play a waterproof and dustproof role, but also can maintain the consistency of appearance.

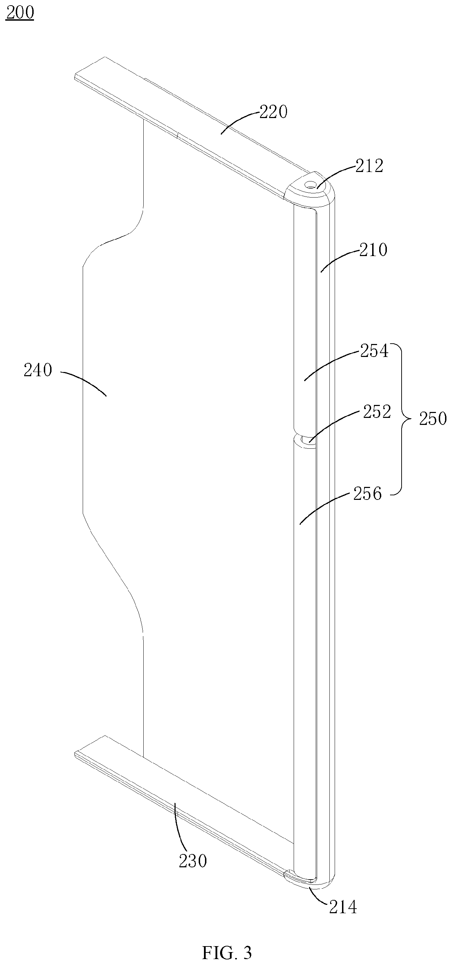

As shown in FIG. 3, which is a schematic structural diagram of the second shell in the electronic device shown in FIG. 1, the second shell 200 may include a second side such as the second side 210, a third side such as the third side 220, and a fourth side such as the fourth side 230. The second side 210 is provided opposite to the first side 120, and the second side 210 is provided between the third side 220 and the fourth side 230. Two ends of the second side 210 are formed by bending along the third side 220 and the fourth side 230, respectively. For example, the second side 210 has a third end such as the third end 212, and a fourth end such as the fourth end 214 opposite to each other. The third end 212 is bent in a direction parallel to the third side 220 and covers the outer surface of the third side 220, and the fourth end 214 is bent in a direction parallel to the fourth side 230 and covers the outer surface of the fourth side 230. It is noted that two end surfaces of the second side 210 may also be flush with the outer surfaces of the third side 220 and the fourth side 230.

When the second shell 200 is received in the accommodation cavity 140, the third end 212 of the second side 210 abuts against the first bent part 132 of the first rear cover 130, and the fourth end 214 of the second side 210 abuts against the second bent part 134 of the first rear cover 130, such that the first side 120, the second side 210, the third side 220, and the fourth side 230 define a complete bezel structure, to protect components inside the electronic device 20 from damage. In some embodiments, the outer surface of the second side 210 is flush with the outer surface of the first end part 242, and the outer surface of the third side 220 is flush with the outer surface of the second end part 244, such that a gap between the first side 120 and the second side 210 and the third side 220 cannot be observed from outside the electronic device 20, maintaining a consistent appearance of the electronic device 20.

The third side 220 and the fourth side 230 are provided opposite to each other, and the third side 220 is movably connected to the first side 114, so that the third side 220 can move in a direction parallel to the first side 114. The fourth side 230 is movably connected to the second side 116, so that the fourth side 230 can move in a direction parallel to the second side 116, which in turn allows the second shell 200 to move outside the accommodation cavity 140, or to move into the accommodation cavity 140.

The second shell 200 further includes a roller such as the roller 250, which is provided between the third side 220 and the fourth side 230. The flexible screen assembly 300 is wound around the roller 250 and is movably connected to the roller, so that the roller 250 can rotate following the movement of the flexible screen assembly 300. The roller 250 includes a rotating shaft such as the shaft 252, and one or more barrels such as a first barrel 254 and a second barrel 256. One end of the shaft 252 is connected to the third side 220 and the other end of the shaft 252 is connected to the fourth side 230. The first barrel 254 and the second barrel 256 are spaced at a distance so that part of the shaft 252 is exposed. The first barrel 254 and the second barrel 256 are rotatably connected to the shaft 252 (e.g., by ball connection), such that the first barrel 254 and the second barrel 256 can rotate about the shaft 252.

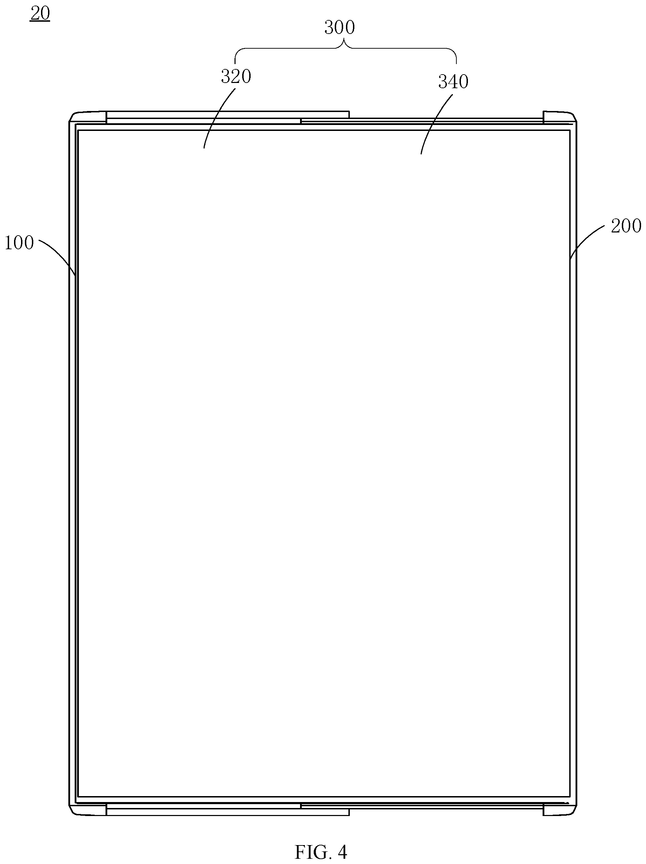

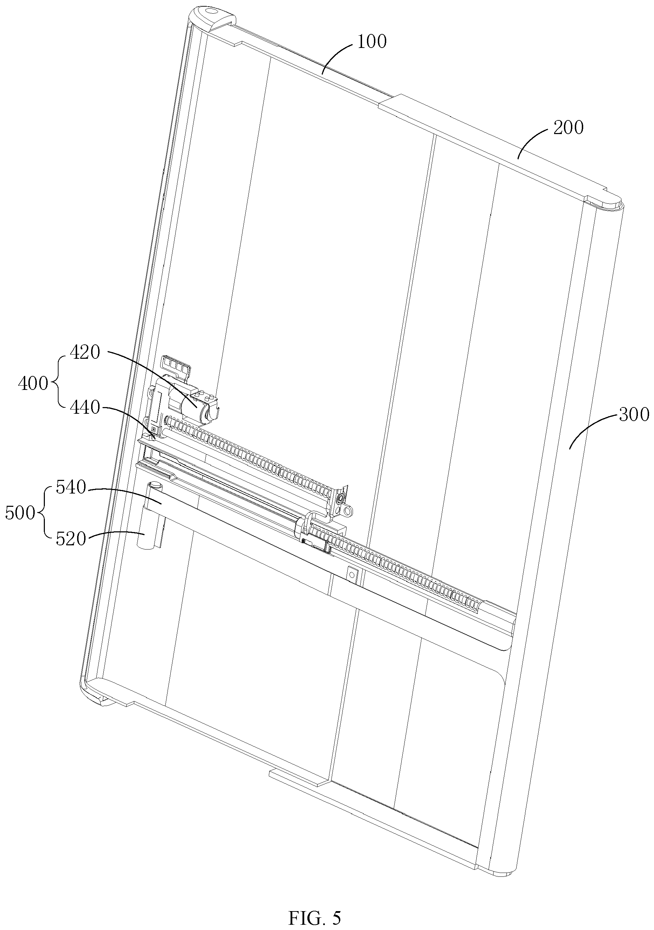

Reference is made to FIG. 4 which is a second schematic structural diagram of the electronic device provided in the embodiments of the present disclosure, and FIG. 5 which is a third schematic structural diagram of the electronic device provided in the embodiments of the present disclosure. Another part of the flexible screen assembly 300 may be wound around the first barrel 254 and the second barrel 256, and slide along outer surfaces of the first barrel 254 and the second barrel 256, which can reduce friction between the flexible screen assembly 300 and the first barrel 254, and friction between the flexible screen assembly 300 and the second barrel 256, allowing the flexible screen assembly 300 to move more smoothly. Furthermore, the flexible screen assembly 300 in sliding can also drive the first barrel 254 and the second barrel 256 to rotate, and the first barrel 254 and the second barrel 256 in rotating can drive the second shell 200 to move, further increasing the speed of the second shell 200 moving towards or away from the first shell 100.

Notably, the shaft 252 may not be provided with one or more barrels on the outside, such as by winding the flexible screen assembly 300 directly on the outer surface of the shaft 252, so that the flexible screen assembly 300 may slide along the outer surface of the shaft 252.

As shown in FIG. 5, the electronic device 20 may further include a first driving device such as the first driving device 400. The first driving device 400 may be provided on the first shell 100. For example, the first driving device 400 may be provided on the carrier plate 110. Alternatively, the first driving device 400 may be provided on the second shell 200. For example, the first driving device 400 may be provided on the second side 210, third side 220 and/or fourth side 230 of the second shell 200. Alternatively, the second shell 200 may be provided with a substrate, and the first driving device 400 may be provided on the substrate.

The first driving device 400 is configured to drive the first shell 100 to move relative to the second shell 200, thereby achieving mating and separation of the first shell 100 and the second shell 200. For example, the first shell 100 may be stationary, and the first driving device 400 may drive the second shell 200 to move in a direction away from the first shell 100, such that the second shell 200 protrudes from the accommodation cavity 140 to achieve separation of the first shell 100 from the second shell 200. The first driving device 400 may also drive the second shell 200 to move in a direction towards the first shell 100, such that the second shell 200 enters the accommodation cavity 140 and is received within the accommodation cavity 140, so as to achieve mating of the first shell 100 and the second shell 200. It is understood that the first shell 100 and the second shell 200 can reciprocate in a direction parallel to the first shell 100 or parallel to the second shell 200, thereby achieving separation and mating between the first shell 100 and the second shell 200.

Alternatively, in the above embodiment, the second shell 200 may be stationary, and the first driving device 400 drives the first shell 100 to reciprocate in a direction parallel to the second shell 200. Alternatively, the first drive device 400 can also drive the first shell 100 and the second shell 200 to move simultaneously, so as to achieve mating and separation of the first shell 100 and the second shell 200.

Referring to FIGS. 4 and 5, the first driving device 400 may include a first motor such as the first motor 420, and a push mechanism, such as the push mechanism 440 connected to the first motor 420. The first motor 420 is configured to drive the push mechanism 440 to push the second shell 200 to reciprocate in a direction parallel to the first shell 100, causing the second shell 200 to extend outside or enter the accommodation cavity 140, so as to achieve separation or mating between the second shell 200 and the first shell 100.

The push mechanism 440 may include a transmission assembly such as the transmission assembly 442, and a push rod such as the push assembly 444. The transmission assembly 442 is connected to the first motor 420. One end of the push assembly 444 is connected to the transmission assembly 442, and the other end of the push assembly 444 is connected to the second shell 200. The first motor 420 is configured to drive the transmission assembly 442 to move, such that the push assembly 444 connected thereto moves along with the transmission assembly 442, which in turn makes the push assembly 444 move in a direction parallel to the first shell 100. The transmission assembly 442 may be any of a screw transmission assembly, a gear set or a telescoping assembly, or a combination thereof, wherein the telescoping assembly may include an electric actuator, an electro-hydraulic actuator, a pneumatic actuator, or a hydraulic actuator, etc.

The push assembly 444 may include a first base such as the first base 4441, and a push rod such as the push rod 4442, wherein the first base 4441 is fixed to the carrier plate 110, the first base 4441 is provided with a slideway, and the push rod 4442 is disposed in the slideway and is slidably connected to the slideway, so that the push rod 4442 can slide within the slideway. One end of the push rod 4442 is connected to the transmission assembly 442, and the other end of the push rod 4442 is connected to the second shell 200; for example, the push rod 4442 may be connected to the shaft 252.

When the electronic device 20 is about to control the first shell 100 to move relative to the second shell 200, the first motor 420 can be controlled to drive the transmission assembly 442 to move. The transmission assembly 442 in moving drives the push rod 4442 to slide within the slideway in a direction parallel to the first shell 100, which in turn drives the second shell 200 to move in a direction parallel to the first shell 100, thereby achieving mating and separation of the first shell 100 and the second shell 200.

For example, the electronic device 20 can control an output shaft of the first motor 420 to rotate clockwise (or counterclockwise), so that the transmission assembly 442 connected with the output shaft of the first motor 420 moves along with the output shaft of the first motor 420. The transmission assembly 442 in moving drives the push rod 4442 to move in a direction away from the first shell 100, and the second shell 200 connected to the push rod 4442 moves along with the push rod 4442, so that the second shell 200 also moves in a direction away from the first shell 100, which in turn makes the second shell 200 extend from the accommodation cavity 140 to achieve separation of the second shell 200 from the first shell 100. For another example, the electronic device 20 can control an output shaft of the first motor 420 to rotate clockwise (or counterclockwise), so that the transmission assembly 442 connected with the output shaft of the first motor 420 moves along with the output shaft of the first motor 420. The transmission assembly 442 in moving drives the push rod 4442 to move in a direction towards the first shell 100, and the second shell 200 connected to the push rod 4442 moves along with the push rod 4442, so that the second shell 200 also moves in a direction towards the first shell 100, which in turn makes the second shell 200 retract from outside of the accommodation cavity 140 into the accommodation cavity 140, achieving mating of the second shell 200 with the first shell 100.

The outer surface of the push rod 4442 is provided with a resilient member such as the resilient member 4443, which may be a spring or other resilient member. The resilient member 4443 can be used to support and protect the push rod 4442. For example, when the electronic device 20 falls, the resilient member 4443 can play a cushioning role to reduce an instantaneous impact on the push rod 4442, which in turn reduces an impact on the transmission assembly 442 connected with the push rod 4442, protecting the transmission assembly 442 from damage.

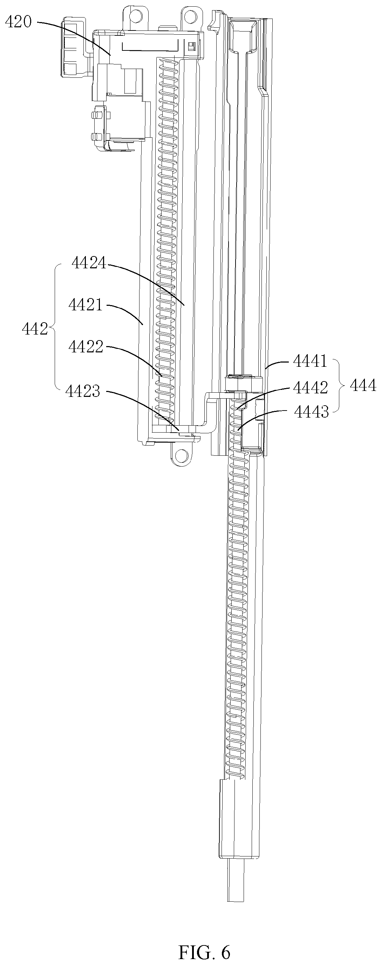

As shown in FIG. 6, which is a schematic structural diagram of the first transmission assembly in the electronic device shown in FIG. 5, the transmission assembly 442 may include a second base 4421, a transmission screw 4422, and a connecting member 4423. The second base 4421 is fixed to the first shell 100. For example, the second base 4421 may be fixed to the carrier plate 110. The transmission screw 4422 is rotatably connected to the second base 4421. For example, the transmission screw 4422 may be connected to a bearing embedded in the second base 4421, thereby enabling the transmission screw 4422 to rotate relative to the second base 4421. The transmission screw 4422 is also connected to the first motor 420, which is configured to drive the transmission screw 4422 to rotate relative to the second base 4421. The connecting member 4423 is sleeved on the transmission screw 4422 and is connected to the transmission screw 4422 in a transmittable way. The connecting member 4423 is also connected to the push rod 4442. The connecting member 4423 is driven by the transmission screw 4422 to reciprocate in an axial direction perpendicular to the transmission screw 4422, which in turn drives the push rod 4442 to reciprocate in a direction parallel to the first shell 100. When the push rod 4442 is reciprocating, the second shell 200 follows the push rod 4442 in reciprocating motion.

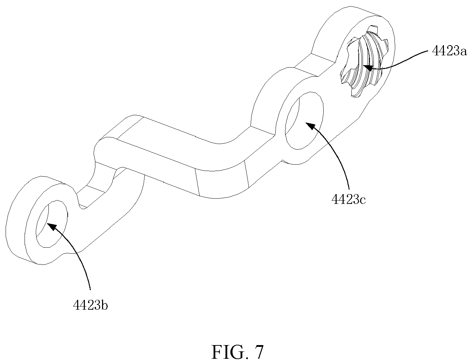

Reference is made to FIG. 7, which is a schematic structural diagram of the connecting member in the first driving device shown in FIG. 6. The transmission assembly 442 may further include a guide rod such as the guide rod 4424, which is provided on the second base 4421. For example, two ends of the guide rod 4424 may be directly inserted and fixed in the connection holes of the second base 4421. Among them, the guide rod 4424 and the transmission screw 4422 are set parallel to each other, and the connecting member 4423 can be sleeved on both the transmission screw 4422 and the guide rod 4424. The guide rod 4424 can play a role of guiding and positioning the connecting member 4423. For example, the connecting member 4423 can be provided with a first through-hole 4423a, a second through-hole 4423b and a third through-hole 4423c. The connecting member 4423 is sleeved on the transmission screw 4422 through the first through-hole 4423a, sleeved on the push rod 4442 through the second through-hole 4423b, and sleeved on the guide rod 4424 through the third through-hole 4423c, and is in sliding contact with the guide rod. The first through-hole 4423a is provided with a transmission thread on its inner wall, which engages with the threaded teeth of the transmission screw 4422, such that the transmission screw 4422 in rotating drives the connecting member 4423 to move linearly in a direction parallel to the first shell 100 via the first through-hole 4423a. It is noted that rotation of the transmission screw 4422 can be transformed to linear movement of the connecting member 4423.

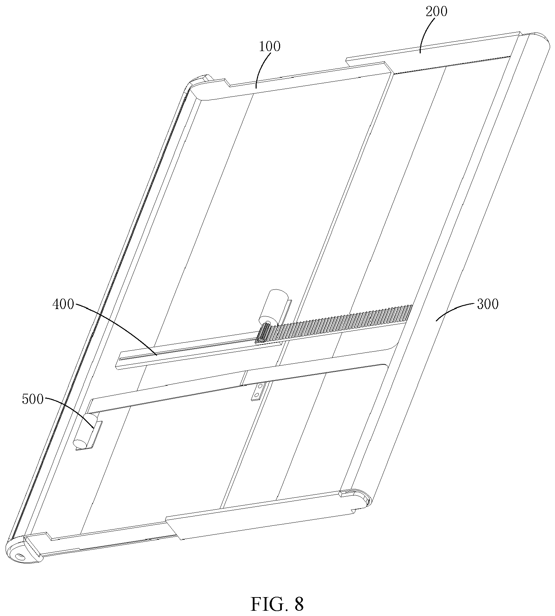

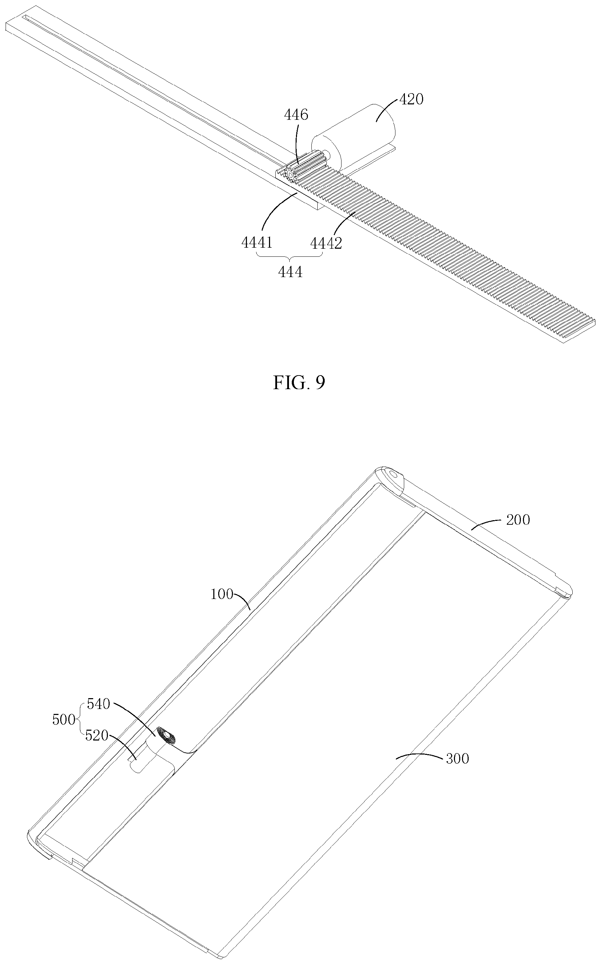

Reference is made to FIG. 8 which is a fourth schematic structural diagram of the electronic device provided in the embodiments of the present disclosure, and FIG. 9 which is a schematic structural diagram of the first driving device in the electronic device shown in FIG. 8. The transmission assembly 442 may be a gear set. For example, the transmission assembly 442 includes a gear such as the gear 446, which is provided on the output shaft of the first motor 420. The first motor 420 may drive the gear 446 to rotate. The push rod 4442 is connected to the gear 446 in a transmittable way. For example, a plurality of engagement teeth can be provided on the outer surface of the push rod 4442, and the push rod 4442 engages the gear 446 through the engagement teeth, so that the gear 446 in rotating can drive the push rod 4442 to reciprocate in a direction parallel to the first shell 100. It should be noted that the transmission assembly 442 may include a plurality of gears, and the reciprocating motion of the push rod 4442 is driven by the mutual transmission of the plurality of gears.

Reference is made to FIG. 4, FIG. 6 in conjunction with FIG. 10, which shows a fifth schematic structural diagram of the electronic device provided in the embodiments of the present disclosure. The electronic device 20 may further include a second driving device such as the second driving device 500 connected to the flexible screen assembly 300. The second driving device 500 may be configured to drive the flexible screen assembly 300 to move following relative motion of the first shell 100 and the second shell 200, so as to retract part of the flexible screen assembly 300 within the first shell 100, or to unfold part of the flexible screen assembly 300 outside the first shell 100, thereby increasing display area of the electronic device 20.

For example, the flexible screen assembly 300 may include a first display 320 referring to part of the flexible screen assembly 300 located on the first shell 100, and a second display 340 referring to another part of the flexible screen assembly 300 located on the second shell 200. In an initial state, the first display 320 is exposed outside the first shell 100 (in other words, outside the electronic device 20), and the second display 340 is received in the accommodation cavity 140, as shown in FIG. 1. When the first driving device 400 drives the second shell 200 to move in a direction away from the first shell 100, the second driving device 500 can drive the flexible screen assembly 300 to move along with the second shell 200 after a predetermined time interval, such that the second display 340 initially received in the accommodation cavity 140 slowly slides along the roller 250 and is gradually unfolded outside the first shell 100 (or outside the electronic device 20), as shown in FIG. 4 and FIG. 5, which in turn makes both the first display 320 and the second display 340 unfolded outside the electronic device 20. The first display 320 and the second display 340 can display one image together or two images separately. Compared to the initial state where only the first display 320 is used for display, unfolding the second display 340 outside the electronic device 20 can increase display area of the electronic device 20.

The embodiments of the present disclosure makes the display area of the flexible screen assembly 300 selectable, by providing two driving devices to control motion state of the first shell 100, the second shell 200 and the flexible screen assembly 300, respectively. Compared with the displays in the related art with fixed installation space, the embodiments of the present disclosure can increase the display area of the electronic device 20 without additional installation space of the flexible screen assembly 300 (or display screen).

Referring still to FIGS. 6 and 10, the second driving device 500 includes a second motor such as the second motor 520, and an attachment belt such as the attachment belt 540. The second motor 520 is configured to drive the attachment belt 540 to curl or extend, so as to allow another part of the flexible screen assembly 300 to be retracted within the accommodation cavity 140 or to be unfolded outside the first shell 100. For example, one end of the attachment belt 540 is wound on an output shaft of the second motor 520, and the other end of the attachment belt 540 is connected to one end of the flexible screen assembly 300, while the other end of the flexible screen assembly 300 is connected to the first shell 100.

When the electronic device 20 is about to control the flexible screen assembly 300 to be unfolded outside the first shell 100, the electronic device 20 can control the second motor 520 to drive the attachment belt 540 to gradually change from a curled state to an extended state, which in turn allows the second display 340 to slide along an outer surface of the first barrel 252 and an outer surface of the second barrel 256 in a direction away from the second motor 520, so as to gradually unfold the second display 340 originally received in the accommodation cavity 140 to be outside the electronic device 20 (or the first shell 100) and to display the images together with the first display 320 originally exposed outside the electronic device 20.

When the electronic device 20 is about to control the flexible screen assembly 300 to be received within the first shell 100, the electronic device 20 can control the second motor 520 to drive the attachment belt 540 to gradually change from an extended state to a curled state, which in turn allows the flexible screen assembly 300 to slide slowly along an outer surface of the first barrel 252 and an outer surface of the second barrel 256 in a direction towards the second motor 520, so as to gradually retract the second display 340 originally unfolded outside the electronic device 20 (or the first shell 100) to be within the accommodation cavity 140 (or within the first shell 100).

The size of the second display 340 is smaller than or equal to that of the first shell 100, so that the second display 340 can be fully unfolded without curling, when it is received in the accommodation cavity 140. Compared with a display that needs to be curled in the related art, the embodiments in the present disclosure can avoid easy damage due to frequent curling of the flexible screen assembly, and can extend service life of the flexible screen assembly.

When the first driving device 400 drives the first shell 100 to move relative to the second shell 200, if the second driving device 500 moves synchronously with the first driving device 400, the flexible screen assembly 300 may become loose, which may lead to undesirable phenomena such as wrinkles or unevenness of the flexible screen assembly 300, thus affecting an image display effect of the electronic device 20.

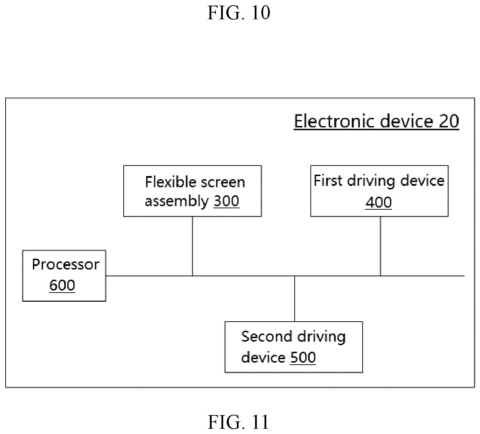

Referring to FIG. 11 which is a sixth schematic structural diagram of the electronic device provided in the embodiments of the present disclosure, in order to make the flexible screen assembly 300 always in a taut state and to ensure tension of the flexible screen assembly 300, a processor of the electronic device 20 in this embodiment, such as the processor 600, is electrically coupled to the first driving device 400 and second driving device 500. The processor 600 may be configured to control, at different timings, the first driving device 400 to drive the first shell 100 and the second shell 200 to move relative to each other, and the second driving device 500 to drive the flexible screen assembly 300 to move following relative motion of the first shell 100 and the second shell 200, such that the first driving device 400 and the second driving device are driven asynchronously in steps. It is understood that there is a time interval between drivings of the first driving device 400 and the second driving device 500, which is very short and is mainly set to ensure that two ends of the flexible screen assembly 300 are always in a taut state, thereby ensuring the tension of the flexible screen assembly 300, and guaranteeing that there are no wrinkles and unevenness or other undesirable phenomena, which in turn makes the image display effect of the electronic device 20 not affected by the movement of the flexible screen assembly 300.

For example, when the second display 340 needs to be unfolded, the processor 600 can control the first driving device 400 to drive the second shell 200 to move in a direction away from the first shell 100 at a first timing T1, so that the second shell 200 extends slowly outside the accommodation cavity 140 to achieve separation of the first shell 100 from the second shell 200. At a second timing T2 during movement of the second shell 200, the processor 600 controls the second motor 520 to drive the attachment belt 540 to unfold slowly, such that the second display 340 of the flexible screen assembly 300 can slide along outer surfaces of the first barrel 254 and the second barrel 256 to be outside the accommodation cavity 140. The first timing T1 is earlier than the second timing T2, such as T2 = T1 + t1, wherein t1 is the first preset time interval that can be set according to an actual situation, and the present disclosure is not limited to it. It is understood that when the second display 340 is unfolded, the second shell 200 moves prior to the flexible screen assembly 300, so that the flexible screen assembly 300 is always in a taut state during gradual unfolding of the second display 340 to be outside the first shell 100.

When the second display 340 needs to be retracted into the accommodation cavity 140, the processor 600 can control the second motor 520 at a third timing T3 to drive the attachment belt 540 to curl slowly, and the attachment belt 540 pulls the second display 340 in a direction towards the second motor 520 during the curling process. The second display 340 in moving will cause the first barrel 254 and the second barrel 256 to rotate, which in turn causes the second side 210 to move in a direction towards the first side 120. At a fourth timing T4 during movement of the flexible screen assembly 300, the processor 600 controls the first driving device 400 to drive the second shell 200 to move in a direction away from the first shell 100, making the second shell 200 retract slowly into the accommodation cavity 140, thereby achieving the mating between the first shell 100 and the second shell 200. Among them, the third timing T3 is earlier than the fourth timing T4, such as T4 = T3 + t2, wherein t2 is the second preset time interval which can be set according to an actual situation, and the present disclosure is not limited to it. It is understood that where the second display 340 is retracted, the flexible screen assembly 300 moves prior to the second shell 200, such that the flexible screen assembly 300 is always in a taut state during gradual retraction of the second display 340 to be within the first shell 100.

In some other embodiments, the processor 600 may also perform control to the first driving device 400 and the second driving device 500 based on a tension value of the flexible screen assembly 300. For example, the flexible screen assembly 300 may be provided with a tension sensor, which is configured to detect a tension value of the flexible screen assembly 300. When the second display 340 needs to be unfolded, the processor 600 firstly controls the first driving device 400 to start, and obtains a first tension value of the flexible screen assembly 300 detected by the tension sensor, and then controls the second driving device 500 to start when the first tension value of the flexible screen assembly 300 exceeds a first preset tension value. Similarly, when the second display 340 needs to be retracted, the processor 600 firstly controls the second driving device 500 to start, and obtains a second tension value of the flexible screen assembly 300 detected by the tension sensor, and then controls the first driving device to start when the second tension value of the flexible screen assembly 300 exceeds a second preset tension value. In this embodiment, start-up timings of the first driving device 400 and the second driving device 500 are determined according to magnitude of the tension value of the flexible screen assembly 300, which can avoid a situation where the tension value of the flexible screen assembly 300 is too small due to a small start-up time interval between the two and the flexible screen assembly 300 is wrinkled, and also avoid a situation where the tension value of the flexible screen assembly 300 is too large due to a large start-up time interval between the two and the flexible screen assembly 300 is damaged. Compared with controlling start-up of two driving devices based on a fixed time interval, the control in this embodiment is more accurate and intelligent.

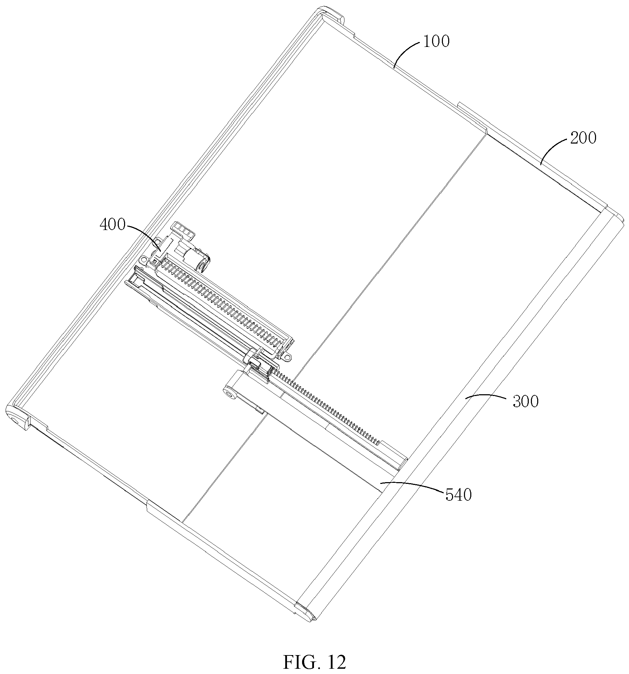

In the above embodiment, alternatively, the electronic device 20 may only be provided with the first driving device 400 without the second driving device 500, as shown in FIG. 12, which is a seventh schematic structural diagram of the electronic device provided in the embodiments of the present disclosure. One end of the flexible screen assembly 300 is connected to the first shell 100, and the other end of the flexible screen assembly 300 is connected to the first driving device 400. The first driving device 400 drives the first shell 100 to move relative to the second shell 200, and drives the flexible screen assembly 300 to move, so that the second display 340 of the flexible screen assembly 300 extends outside the accommodation cavity 140 and is unfolded on an outer surface of the second shell 100, thus allowing the second display 340 to display image(s) together with the first display 320.

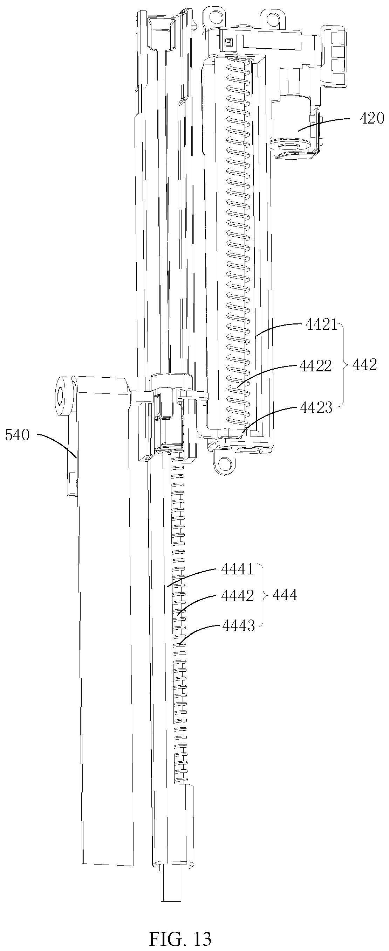

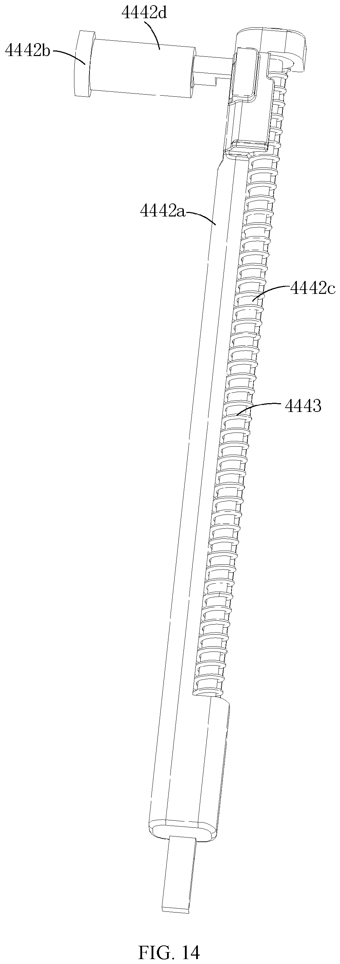

As shown in FIG. 13 which is a schematic structural diagram of the first driving device in the electronic device shown in FIG. 12, and FIG. 14 which is a schematic structural diagram of the push assembly in the first driving device shown in FIG. 12, the push rod 4442 includes a support part 4442a, a rotating shaft 4442b and a push part 4442c. One end of the push part 4442 is fixed to the support part 4442a, and the other end of the push part 4442c is connected to the roller 250 (e.g., connected with the shaft 252). The rotating shaft 4442b is provided at an end of the support part 4442a away from the roller 250. The flexible screen assembly 300 is slidably connected to the rotating shaft 4442b via an attachment belt 540. For example, the attachment belt 540 is wound around the rotating shaft 4442b, one end of the attachment belt 540 is fixedly connected to the first shell 100, and the other end of the attachment belt 540 is connected to the other end of the flexible screen assembly 300.

When the second display 340 needs to be unfolded, the processor 600 can control the first motor 420 to drive the transmission assembly 442 to move, and the transmission assembly 442 drives the push assembly 444 to move in a direction away from the first shell 100. The push assembly 444 in moving pushes the second shell 200 to move as well in a direction away from the first shell 100 through the push part 4442c. Meanwhile, since the rotating shaft 4442b also moves in a direction away from the first shell 100, the attachment belt 540 also moves along with the rotating shaft 4442b in a direction away from the first shell 100 and slides along the outer surface of the rotating shaft 4442b, a length of the attachment belt 540 located on the second shell 200 is increased. Under joint action of the second shell 200 and the attachment belt 540, the second display 340 slides along the rollers 250 toward outer surface of the second shell 200 to be outside the accommodation cavity 140, making the second display 340 exposed outside the electronic device 20. It is understood that when the flexible screen assembly 300 receives a thrusting force applied thereto by the second shell 200, the attachment belt 540 will gradually reduce a pulling force thereof on the flexible screen assembly 300, thereby allowing the second display 340 of the flexible screen assembly 300 to be unfolded.

When the second display 340 needs to be retracted, the processor 600 can control the first motor 420 to drive the transmission assembly 442 to move, and the transmission assembly 442 drives the push assembly 444 to move in a direction towards the first shell 100. The push assembly 444 in moving pulls the second shell 200 to move as well in a direction towards the first shell 100 through the push part 4442c. Meanwhile, since the rotating shaft 4442b also moves in a direction towards the first shell 100, the attachment belt 540 also follows the rotating shaft 4442b to slide along the outer surface of the rotating shaft 4442b towards the first shell 100, a length of the attachment belt 540 on the second shell 200 is reduced. Under joint action of the second shell 200 and the attachment belt 540, the second display 340 slides along the roller 250 towards the inner surface of the second shell 200 to be within the accommodation cavity 140, so that the second display 340 is retracted into the accommodation cavity 140. It is understood that when the second shell 200 moves towards the first shell 100, the thrusting force exerted by the second shell 200 on the flexible screen assembly 300 will gradually decrease, and at this time, when the attachment belt 540 approaches, the first shell will pull the flexible screen assembly 300 in a direction towards the first shell 100, thereby allowing the second display 340 of the flexible screen assembly 300 to be retracted into the accommodation cavity 140.

It is noted that the second display 340 of the flexible screen assembly 300 remains taut under joint action of the second shell 200 and the attachment belt 540, during the process of the second display 340 of the flexible screen assembly 300 being unfolded outside the first shell 100 or retracted into the first shell 100, guaranteeing that the image display effect of the electronic device 20 is not affected.

In order to avoid excessive friction between the attachment belt 540 and the rotating shaft 4442b, resulting in excessive tension exerted by the attachment belt 540 on the flexible screen assembly 300 which in turn leads to excessive tension damage to the flexible screen assembly 300, the outer surface of the rotating shaft 4442b in this embodiment is also provided with a third barrel such as the third barrel 4442d. The third barrel 4442d is rotatably connected to the rotating shaft 4442b, so that the third barrel 4442d can rotate about the rotating shaft 4442b, which in turn allows the attachment belt 540 in moving to drive the third barrel 4442d to rotate, thereby further reducing the friction between the attachment belt 540 and the third barrel 4442d, thus making the attachment belt 540 move more smoothly, and avoiding a situation where the attachment belt 540 exerts too much tension on the flexible screen assembly 300 to cause damage to the flexible screen assembly 300. Moreover, the third barrel 4442d may also form a joint rolling mechanism together with the roller 250, thus ensuring smooth retraction and smooth unfolding of the flexible screen assembly 300.

It is understood that the first motor 420 in the present disclosure provides an active driving effect, while the rollers 250 and the rotating shaft on the second shell 200 are linkage mechanisms and undergo linkage movement under active driving of the first motor 420, so that a motion stroke of the push part 4442c, an unfolding length of the second display 340 and a motion stroke of the attachment belt 540 are equal to each other, thus ensuring that the flexible screen assembly 300 always remain a taut state in the unfolding process and retraction process (guaranteeing that the tension of the flexible screen assembly 300 is within a certain range), so as to avoid abnormal situations, e.g., too large tension of the flexible screen assembly 300 causing damage or too small tension of the flexible screen assembly 300 causing wrinkle which are due to asynchronous unfolding.

In the present embodiment, relative motion of the first shell 100 and the second shell 200 as well as unfolding and retraction of the flexible screen assembly 300 can be realized by the first driving device 400 only, which can reduce one driving device as compared with the above embodiment and can simplify structure of the electronic device 20 on the basis of the above embodiment.

As shown in FIG. 3, the second shell 200 may further include a second rear cover such as the second rear cover 240. The second rear cover 240 is provided over the second side 210, the third side 220, and the fourth side 230, so as to cover components provided on the second shell 200. It is understood that the second display 340 of the flexible screen assembly 300 is provided on one side of the second side 210, the third side 220 and the fourth side 230, and the second rear cover 240 is provided on the other side of the second side 210, the third side 220 and the fourth side 230. The second display 340 of the flexible screen assembly 300 can display image(s) together with the first display 320 provided on the first shell 100. It should be noted that the first display 320 provided on the first shell 100 can also display images alone.

A detailed description of the shell assembly and the electronic device provided in the embodiments of the present disclosure is set forth above. In this document, specific examples are presented to illustrate the principle and implementation of the present disclosure, but the above description of embodiments is only used to help understand the present disclosure. Meanwhile, for those skilled in the field, the specific implementation and the application scenario are subject to change based on the idea of the present disclosure. In a word, the content of this specification should not be construed as limiting the present disclosure.

## Claims

1. An electronic device, comprising:
a first shell;
a second shell movably connected to the first shell;
a first driving device configured to drive the first shell to move relative to the second shell, so as to realize mating and separation of the first shell and the second shell;
a flexible screen assembly, one end of the flexible screen assembly being connected to the first shell; and
a second driving device connected to the other end of the flexible screen assembly, the second driving device being configured to drive the flexible screen assembly to move following relative motion of the first shell and the second shell, so as to retract part of the flexible screen assembly within the first shell or the second shell, or to unfold part of the flexible screen assembly outside the first shell or the second shell.

2. The electronic device according to claim 1, further comprising a processor, wherein the processor is coupled to the first driving device and the second driving device, and is configured to, at different timings, control the first driving device to drive the first shell to move relative to the second shell, and control the second driving device to drive the flexible screen assembly to move following the relative motion of the first shell and the second shell.

3. The electronic device according to claim 2, wherein the processor is configured to:
control the first driving device at a first timing to drive the first shell to move relative to the second shell, so as to separate the first shell from the second shell; and
control the second driving device at a second timing to drive the flexible screen assembly to move following the relative motion of the first shell and the second shell, so that part of the flexible screen assembly is unfolded outside the first shell or the second shell,
wherein the first timing is earlier than the second timing.

4. The electronic device according to claim 3, wherein the processor is further configured to control the second driving device at a third timing to drive the flexible screen assembly to move, and to control the first driving device at a fourth timing to drive the first shell to move relative to the second shell so as to make the first shell mate with the second shell, so that part of the flexible screen assembly is retracted within the first shell or the second shell, wherein the third timing is later than the fourth timing.

5. The electronic device according to claim 1, wherein the first driving device and the second driving device are provided on the first shell; the flexible screen assembly is wound on the second shell and is movably connected to the second shell; one end of the flexible screen assembly is fixedly connected to the first shell, and the other end of the flexible screen assembly is connected to the second driving device.

6. The electronic device according to claim 5, wherein the first driving device comprises a first motor and a push mechanism connected to the first motor; the first motor is configured to drive the push mechanism to move in a direction parallel to the first shell, such that the second shell moves along with the push mechanism in a direction parallel to the first shell, so as to realize mating and separation of the first shell and the second shell.

7. The electronic device according to claim 6, wherein the push mechanism comprises a transmission assembly connected to the first motor, and a push assembly connected to the transmission assembly and the second shell; the first motor is configured to drive the transmission assembly to move, so that the push mechanism moves along with the transmission assembly and drives the second shell to move in a direction parallel to the first shell.

8. The electronic device according to claim 7, wherein the push assembly comprises a first base provided at the first shell, and a push rod slidably connected to the first base and connected to the second shell; a resilient member is sleeved on an outer surface of the push rod, to support and protect the push rod.

9. The electronic device according to claim 8, wherein the transmission assembly comprises a second base provided at the first shell, a transmission screw rotatably connected to the second base and connected to the first motor, and a connecting member sleeved on the transmission screw and connected to one end of the push rod; the first motor is configured to drive the transmission screw to rotate, so as to drive the connecting member and the push rod to move in a direction parallel to the first shell.

10. The electronic device according to claim 9, wherein the transmission assembly further comprises a guide rod provided parallel to the transmission screw; the connecting member is provided with a first through-hole and a second through-hole, wherein the transmission screw passes through the first through-hole and the guide rod passes through the second through-hole.

11. The electronic device according to claim 6, wherein the transmission assembly is any of a gear set, an electric actuator, an electro-hydraulic actuator, a pneumatic actuator or a hydraulic actuator, or a combination thereof.

12. The electronic device according to claim 7, wherein the second shell comprises a second side, a third side, a fourth side opposite to the third side, and a roller; the second side and the roller are provided between the third side and the fourth side, and the flexible screen assembly is wound on the roller so that the roller rotates following the movement of the flexible screen assembly.

13. The electronic device according to claim 12, wherein the roller comprises a shaft, a first barrel and a second barrel; one end of the shaft is connected to the third side, and the other end of the shaft is connected to the fourth side; the first barrel and the second barrel are spaced on an outer surface of the shaft and are rotatably connected to the shaft; the other end of the push rod is connected to the shaft, and is located at an interval between the first barrel and the second barrel.

14. The electronic device according to claim 5, wherein the second driving device comprises a second motor and an attachment belt; one end of the attachment belt is connected to an output shaft of the second motor, and the other end of the attachment belt is connected to the flexible screen assembly; the second motor is configured to drive the attachment belt to extend so that part of the flexible screen assembly is unfolded outside the second shell; the second motor is further configured to drive the attachment belt to curl so that part of the flexible screen assembly is retracted within the second shell.

15. A shell assembly adapted to retraction and unfolding of a flexible screen assembly, comprising:
a first shell;
a second shell movably connected to the first shell;
a first driving device configured to drive the first shell to move relative to the second shell, so as to realize mating and separation of the first shell and the second shell; and
a second driving device connected to the other end of the flexible screen assembly, the second driving device being configured to drive the flexible screen assembly to move following relative motion of the first shell and the second shell, so as to retract part of the flexible screen assembly within the first shell or the second shell, or to unfold part of the flexible screen assembly outside the first shell or the second shell.

16. The shell assembly according to claim 15, wherein the first driving device comprises a first motor and a push mechanism connected to the first motor; the first motor is configured to drive the push mechanism to move in a direction parallel to the first shell, such that the second shell moves along with the push mechanism in a direction parallel to the first shell, so as to realize mating and separation of the first shell and the second shell.

17. The shell assembly according to claim 16, wherein the push mechanism comprises a transmission assembly connected to the first motor, and a push assembly connected to the transmission assembly and the second shell; the first motor is configured to drive the transmission assembly to move so that the push mechanism moves along with the transmission assembly and drives the second shell to move in a direction parallel to the first shell.

18. The shell assembly according to claim 17, wherein the push assembly comprises a first base provided at the first shell, and a push rod slidably connected to the first base and connected to the second shell; a resilient member is sleeved on an outer surface of the push rod, to support and protect the push rod.

19. The shell assembly according to claim 18, wherein the transmission assembly comprises a second base provided at the first shell, a transmission screw rotatably connected to the second base and connected to the first motor, and a connecting member sleeved on the transmission screw and connected to one end of the push rod; the first motor is configured to drive the transmission screw to rotate, so as to drive the connecting member and the push rod to move in a direction parallel to the first shell.

20. The shell assembly according to claim 15, wherein the second driving device comprises a second motor and an attachment belt; one end of the attachment belt is connected to an output shaft of the second motor, and the other end of the attachment belt is connected to the flexible screen assembly; the second motor is configured to drive the attachment belt to extend so that part of the flexible screen assembly is unfolded outside the second shell; the second motor is further configured to drive the attachment belt to curl so that part of the flexible screen assembly is retracted within the second shell.
